# EUROPÄISCHE PATENTANMELDUNG

(11) **EP 1 890 078 A1**
(43) Veröffentlichungstag der Anmeldung: **20.02.2008**
(21) Anmeldenummer: 06118939.5
(22) Anmeldetag: 15.08.2006
(51) Int. Cl.: F21V 7/00, F21S 8/10, F21V 17/16, F21Y 101/02

(54) **Reflektorelement für ein Fahrzeugbeleuchtungselement**

(71) Anmelder: Hella KGaA Hueck & Co., 59552 Lippstadt (DE)
(72) Erfinder: Gröne, Stefan, 33034, Brakel-Hembsen (DE); Haase, Christian, 59755, Arnsberg (DE)

(57) **Zusammenfassung**

Die Erfindung betrifft ein Reflektorelement (10) für ein Fahrzeugbeleuchtungselement mit zumindest einer Lichtquelle (12), zumindest einem Reflektorbereich (14/16) zur Lichtlenkung des von der Lichtquelle (12) abgegebenen Lichts (18) und zumindest einem Aufnahmebereich (20) für einen Lichteinkoppelbereich eines Lichtleiters.

Aufgabe der vorliegenden Erfindung ist es, ein Reflektorelement (10) für ein Fahrzeugbeleuchtungselement derart weiterzubilden, dass bei Einsatz eines Reflektorelementes (10) die Lichtquelle (12) an einem thermisch unkritischen Ort positioniert werden kann.

Diese Aufgabe wird erfindungsgemäß dadurch gelöst, dass die Längsmittelachse (24) des Lichteinkoppelbereichs des Lichtleiters in einem Winkel (α) zur Längsachse (22) der Hauptabstrahlrichtung der Lichtquelle (12) angeordnet ist.

## Beschreibung

Die Erfindung betrifft ein Reflektorelement für ein Fahrzeugbeleuchtungselement mit zumindest einer Lichtquelle, zumindest einem Reflektorbereich zur Lichtlenkung des von der Lichtquelle abgegebenen Lichts und zumindest einem Aufnahmebereich für einen Lichteinkoppelbereich eines Lichtleiters.

Bei modernen Fahrzeugen mit Klarglasoptik sowohl bei Fahrzeugleuchten als auch bei Fahrzeugscheinwerfern werden aus Designgründen immer häufiger Lichtleiter eingesetzt, die unterschiedliche Signalfunktionen wie beispielsweise Schlusslicht, Bremslicht, Blinklicht, Positionslicht oder Tagfahrlicht erfüllen. Hierbei ist es häufig gewünscht, dass der Lichtleiter in einem oben liegenden Bereich der Fahrzeugleuchte oder des Fahrzeugscheinwerfers angeordnet ist. Da aber insbesondere bei Fahrzeugscheinwerfern aufgrund der Abwärme der für die Hauptlichtfunktionen zuständigen Beleuchtungselemente eine sehr hohe Temperatur in den oberen Bereichen herrscht, kann es zu thermischen Problemen beim Betrieb von den Lichtquellen für die mittels des Lichtleiters generierten Lichtfunktion kommen. Hier sind aus dem Stand der Technik Lösungen mit längeren Glas- oder Kunststofflichtleitern zur Lichtführung bekannt, so dass die Lichtquelle für die mittels des Lichtleiters generierten Lichtfunktion an einer thermischen unkritischeren Position angeordnet werden kann. Die bekannten Glas- oder Kunststofflichtleiter erzeugen jedoch sehr hohe Lichtverluste und sind zusätzlich sehr teuer. Eine Lösung des beschriebenen Problems besteht darin, Reflektorelemente zur Lichtleitung und Lichteinkopplung in den Lichtleiter einzusetzen, wie sie beispielsweise aus der DE 44 39 547 A1 oder der DE 197 39 018 A1 bekannt sind. Hierbei stellt es sich jedoch als problematisch dar, dass hinter dem Lichteinkoppelbereich des Lichtleiters eine große Bautiefe in der Fahrzeugleuchte oder dem Fahrzeugscheinwerfer zu Verfügung stehen muss, da eine direkte achsparallele Zuordnung von der Längsachse der Hauptabstrahlrichtung der Lichtquelle zu der Längsmittelachse des Lichteinkoppelbereiches des Lichtleiters besteht. Dies erfordert wieder eine unerwünschte Anordnung der Lichtquelle in einem oben liegenden Bereich der Fahrzeugleuchte oder des Fahrzeugscheinwerfers.

Aufgabe der vorliegenden Erfindung ist es, ein Reflektorelement für ein Fahrzeugbeleuchtungselement gemäß dem Oberbegriff des Anspruchs 1 derart weiterzubilden, dass bei Einsatz eines Reflektorelementes die Lichtquelle an einem thermisch unkritischen Ort positioniert werden kann.

Diese Aufgabe wird erfindungsgemäß dadurch gelöst, dass die Längsmittelachse des Lichteinkoppelbereichs des Lichtleiters in einem Winkel zur Längsachse der Hauptabstrahlrichtung der Lichtquelle angeordnet ist.
Dadurch, dass die Längsmittelachse des Lichteinkoppelbereichs des Lichtleiters in einem Winkel zur Längsachse der Hauptabstrahlrichtung der Lichtquelle angeordnet ist, wird in dem Reflektorelement eine Lichtumlenkung erzeugt, so dass es möglich ist, die Lichtquelle an einem thermisch unkritischeren Ort, wie beispielsweise in einem unten liegenden Bereich der Fahrzeugleuchte oder des Fahrzeugscheinwerfers anzuordnen.

Bei einer vorteilhaften Ausführungsform der Erfindung ist die Längsmittelachse des Lichteinkoppelebreiches des Lichtleiters in einem Winkelbereich zwischen 10° und 170°, vorzugsweise in einem Winkelbereich von 75° bis 105° zur Längsachse der Hauptabstrahlrichtung der Lichtquelle angeordnet, so dass die Position der Lichtquelle im Bezug auf die Längsmittelachse des Lichteinkoppelbereiches des Lichtleiters optimal wählbar ist.

Um ein Maximum des seitens der Lichtquelle abgegebenen Lichtstroms in den Lichtleiter einkoppeln und somit nutzen zu können, ist das Reflektorelement vorteilhaft derart ausgebildet, dass es ein die Lichtquelle umschließender Hohlkörper ist.

Vorteilhaft ermöglicht des Reflektorelement die Überbrückung eines möglichst großen Abstandes zwischen der Lichtquelle und dem Lichteinkoppelbereich des Lichtleiters, damit die Lichtquelle an einem thermisch unkritischen Ort positioniert werden kann. Weiterhin muss natürlich gleichzeitig ein Maximum an Lichtstrom nutzbar sein. Dies wird vorteilhaft dadurch erreicht, dass der Hohlkörper eine wesentliche größere Längsausdehnung als Querschnittsausdehnung hat.

Eine möglichst einfache Fertigung des Reflektorelementes, insbesondere als Kunststoffspritzgussteil, ist dadurch gegeben, dass der Hohlkörper aus zumindest zwei miteinander verbindbaren Teilen besteht, wobei die Trennebene der beiden Teile parallel zur Längsachse der Hauptabstrahlrichtung der Lichtquelle verläuft.

Um diese zumindest zwei Teile dauerhaft sicher miteinander zu verbinden weisen sie vorteilhaft entsprechende Rastelemente auf.

Für optimale optische Eigenschaften des Reflektorelementes ist es wichtig, dass die zumindest zwei Teile sehr genau zueinander ausgerichtet sind. Hierzu weisen sie vorteilhaft Zentrierelemente auf.

Ein optimaler lichttechnischer Wirkungsgrad des Reflektorelementes ist dadurch gegeben, dass das Reflektorelement mehrere Reflektorbereiche aufweist. Hierbei weist ein erster Reflektorbereich vorteilhaft einen im wesentlichen elliptischen Aufbau auf, wobei der erste Brennpunkt der Ellipse des ersten Reflektorbereiches mit dem Brennpunkt der Lichtquelle zusammenfällt. Vorteilhafterweise weist auch ein zweiter Reflektorbereich einen im wesentlichen elliptischen Aufbau auf, wobei der erste Brennpunkt der Ellipse des zweiten Reflektorbereiches mit dem zweiten Brennpunkt der Ellipse des ersten Reflektorbereiches zusammenfällt.

Anhand der beigefügten Zeichnungen wird die Erfindung nachfolgend näher erläutert. Dabei zeigt:
- Fig. 1: Eine perspektivische Innenansicht einer Hälfte eines Reflektorelementes.
- Fig. 2: Eine Seitenansicht der in Figur 1 gezeigten Hälfte des Reflektorelementes.
- Fig. 3: Eine perspektivische Seitenansicht des Reflektorelementes.

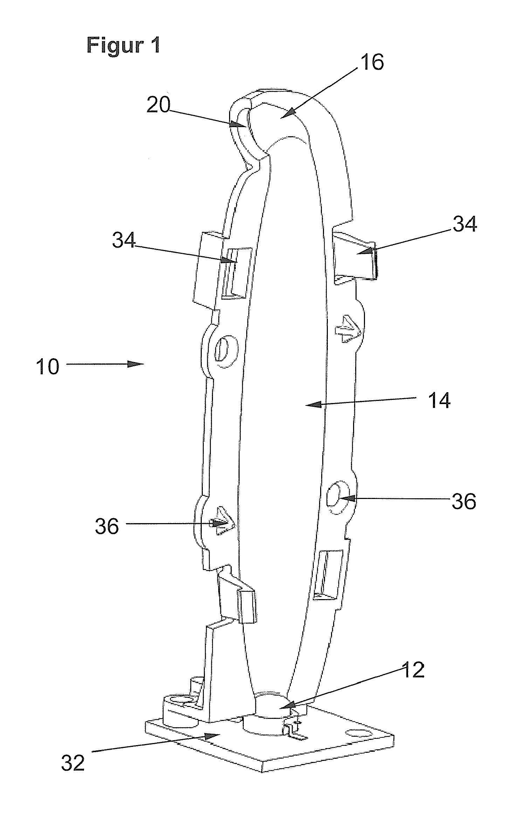

In Figur 1 ist eine perspektivische Innenansicht eines als Kunststoffspritzgussteil ausgebildeten Reflektorelementes (10) dargestellt. Das Reflektorelement (10) hat eine längliche Grundform, wobei am unteren Ende eine auf einer Leiterplatte (32) positionierte Lichtquelle (12) in Form einer LED angeordnet ist. Das Reflektorelement (10) umschließt die Lichtquelle (12) derart, dass sämtliche Lichtstrahlen erfasst werden und mittels des ersten Reflektorbereiches (14) und des zweiten Reflektorbereiches (16) in dem Reflektorelement (10) geleitet werden. Am oberen seitlichen Ende des Reflektorelementes (10) ist ein Aufnahmebereich (20) für einen Lichteinkoppelbereich eines hier nicht dargestellten Lichtleiters angeformt. Um eine sehr genaue Positionierung der beiden Hälften des Reflektorelementes (10) zu gewährleisten, weist es entsprechende Zentrierelemente (36) in Form von Zentrierdomen und entsprechend zugeordneten Zentrierbohrungen auf. Eine einfache und dauerhaft sichere Verbindung der beiden Hälften des Reflektorelementes (10) ist durch Rasteelemente (34) gegeben, die aus einstückig angeformten Rastnasen und entsprechend zugeordneten Haltelaschen bestehen.

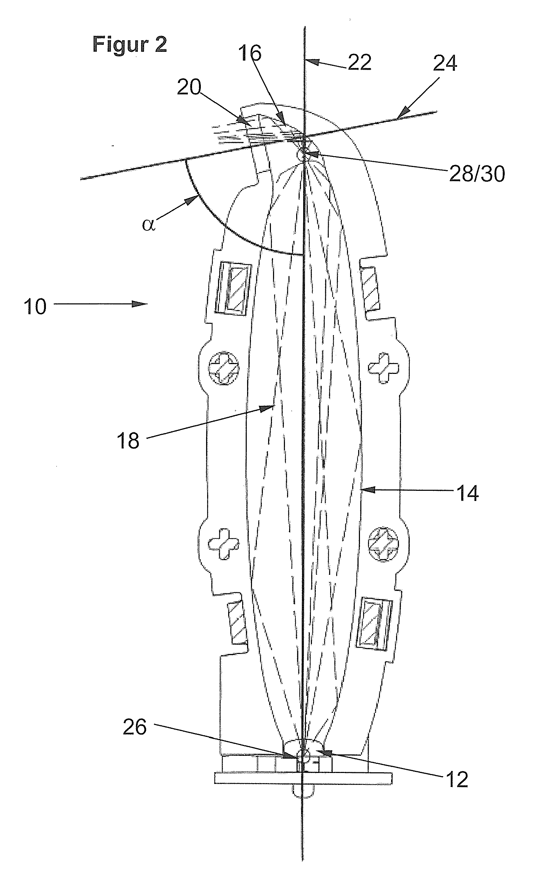

Figur 2 zeigt die Seitenansicht der in Figur 1 gezeigten Hälfte des Reflektorelementes (10). Der erste Reflektorbereich (14) des Reflektorelementes (10) weist einen elliptischen Aufbau auf, wobei der erste Brennpunkt (26) der Ellipse mit dem Brennpunkt der Lichtquelle (12) zusammenfällt. Der zweite Reflektorbereich (16) weist ebenfalls einen elliptischen Aufbau auf, wobei der erste Brennpunkt (30) dieser Ellipse mit dem zweiten Brennpunkt (28) der Ellipse des ersten Reflektorbereiches (14) zusammenfällt. Ein derartiger Aufbau ermöglicht einen sehr hohen lichttechnischen Wirkungsgrad des Systems, da das von der Lichtquelle (12) abgegebene Licht (18) pro Ellipse nur einmal reflektiert wird uns es somit zu möglichst wenigen Reflexionsverlusten kommt. Um die Lichtquelle (12) an einem für den Betrieb thermisch unkritischen Ort in der Fahrzeugleuchte oder dem Fahrzeugscheinwerfer zu positionieren und es aber gleichzeitig zu ermöglichen, dass der Lichteinkoppelbereich des Lichtleiters in einem oben liegenden Bereich des Fahrzeugbeleuchtungselementes anzuordnen, ist die Längsmittelachse (24) des Lichteinkoppelbereiches des Lichtleiters in einem Winkel (α) von hier 80° zur Längsachse (22) der Hauptabstrahlrichtung der Lichtquelle (12) angeordnet. Das von der Lichtquelle (12) abgegebene Licht (18) wird teilweise an dem ersten Reflektorbereich (14) reflektiert, durchläuft den gemeinsamen Brennpunkt (28/30) der beiden Reflektorbereiche (14/16), wird dann an dem zweiten Reflektorbereich (16) entsprechend dem Winkel (α) umgelenkt und dann an dem Lichteinkoppelbereich des Lichtleiters in diesen eingekoppelt.

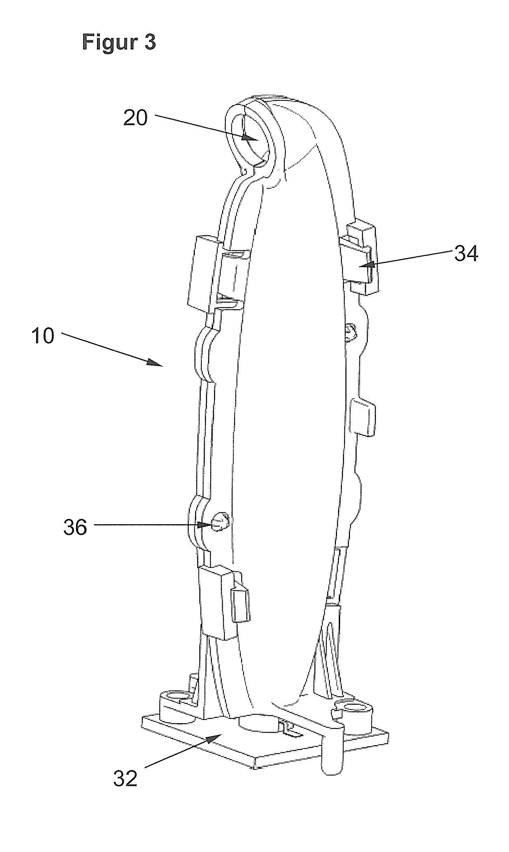

In Figur 3 ist in einer perspektivischen Seitenansicht das aus zwei Hälften bestehende Reflektorelement (10) für ein Fahrzeugbeleuchtungselement dargestellt. Am unteren Ende des Reflektorelementes (10) ist eine die Lichtquelle tragende Leiterplatte (32) angeordnet. Der Aufnahmebereich (20) für einen Lichteinkoppelbereich eines nicht dargestellten Lichtleiters befindet sich am seitlichen oberen Ende des Reflektorelementes (10). Die genaue Position der beiden Hälften des Reflektorelementes (10) zueinander wird durch entsprechend ausgebildete Zentrierelemente (36) gewährleistet. Eine dauerhaft sichere und feste Verbindung der beiden Hälften des Reflektorelementes (10) zueinander ist durch entsprechend ausgebildete und einstückig an die Hälften angespritzte Rastelemente (34) realisiert.

### Bezugszeichenliste

- 10: Reflektorelement
- 12: Lichtquelle
- 14: erster Reflektorbereich
- 16: zweiter Reflektorbereich
- 18: Lichtstrahlen
- 20: Aufnahmebereich
- 22: Längsachse
- 24: Längsmittelachse
- 26: erster Brennpunkt
- 28: zweiter Brennpunkt
- 30: erster Brennpunkt
- 32: Leiterplatte
- 34: Rastelement
- 36: Zentrierelement
- α: Winkel

## Patentansprüche

1. Reflektorelement (10) für ein Fahrzeugbeleuchtungselement mit zumindest einer Lichtquelle (12), zumindest einem Reflektorbereich (14/16) zur Lichtlenkung des von der Lichtquelle (12) abgegebenen Lichts (18) und zumindest einem Aufnahmebereich (20) für einen Lichteinkoppelbereich eines Lichtleiters, **dadurch gekennzeichnet, dass** die Längsmittelachse (24) des Lichteinkoppelbereichs des Lichtleiters in einem Winkel (α) zur Längsachse (22) der Hauptabstrahlrichtung der Lichtquelle (12) angeordnet ist.

2. Reflektorelement (10) für ein Fahrzeugbeleuchtungselement nach Anspruch 1, **dadurch gekennzeichnet, dass** die Längsmittelachse (24) des Lichteinkoppelbereichs des Lichtleiters in einem Winkelbereich (α) zwischen 10° und 170°, vorzugsweise in einem Winkelbereich (α) von 75° bis 105° zur Längsachse (22) der Hauptabstrahlrichtung der Lichtquelle (12) angeordnet ist.

3. Reflektorelement (10) für ein Fahrzeugbeleuchtungselement nach einem der vorstehenden Ansprüche, **dadurch gekennzeichnet, dass** das Reflektorelement (10) als ein die Lichtquelle (12) umschließender Hohlkörper ausgebildet ist.

4. Reflektorelement (10) für ein Fahrzeugbeleuchtungselement nach Anspruch 3, **dadurch gekennzeichnet, dass** der Hohlkörper eine wesentlich größere Längsausdehnung als Querschnittsausdehnung aufweist.

5. Reflektorelement (10) für ein Fahrzeugbeleuchtungselement nach Anspruch 3 oder 4, **dadurch gekennzeichnet, dass** der Hohlkörper aus zumindest zwei miteinander verbindbaren Teilen besteht, wobei die Trennebene der beiden Teile parallel zur Längsachse (22) der Hauptabstrahlrichtung der Lichtquelle (12) verläuft.

6. Reflektorelement (10) für ein Fahrzeugbeleuchtungselement nach Anspruch 5, **dadurch gekennzeichnet, dass** die zumindest zwei miteinander verbindbaren Teile mittels Rastelementen (34) miteinander verbindbar sind.

7. Reflektorelement (10) für ein Fahrzeugbeleuchtungselement nach Anspruch 5 oder 6, **dadurch gekennzeichnet, dass** die zumindest zwei miteinander verbindbaren Teile Zentrierelemente (36) aufweisen.

8. Reflektorelement (10) für ein Fahrzeugbeleuchtungselement nach einem der vorstehenden Ansprüche, **dadurch gekennzeichnet, dass** das Reflektorelement (10) mehrere Reflektorbereiche (14/16) aufweist.

9. Reflektorelement (10) für ein Fahrzeugbeleuchtungselement nach Anspruch 8, **dadurch gekennzeichnet, dass** ein erster Reflektorbereich (14) einen im wesentlichen elliptischen Aufbau aufweist, wobei der erste Brennpunkt (26) der Ellipse des ersten Reflektorbereiches (14) mit dem Brennpunkt der Lichtquelle (12) zusammenfällt.

10. Reflektorelement (10) für ein Fahrzeugbeleuchtungselement nach Anspruch 9, **dadurch gekennzeichnet, dass** auch ein zweiter Reflektorbereich (16) einen im wesentlichen elliptischen Aufbau aufweist, wobei der erste Brennpunkt (30) der Ellipse des zweiten Reflektorbereiches (16) mit dem zweiten Brennpunkt (28) der Ellipse des ersten Reflektorbereiches (14) zusammenfällt.
